(19) Europäisches Patentamt
European Patent Office
Office européen des brevets

(11) EP 1 768 899 B1

(12) **FASCICULE DE BREVET EUROPEEN**

(45) Date de publication et mention de la délivrance du brevet:
**11.12.2013 Bulletin 2013/50**

(21) Numéro de dépôt: **05791015.0**

(22) Date de dépôt: **13.07.2005**

(51) Int Cl.:
***B64C 9/32*** *(2006.01)* ***B64C 13/16*** *(2006.01)*
***B64C 9/20*** *(2006.01)* ***B64C 19/02*** *(2006.01)*
***G05D 1/06*** *(2006.01)*

(86) Numéro de dépôt international:
**PCT/FR2005/001815**

(87) Numéro de publication internationale:
**WO 2006/016070 (16.02.2006 Gazette 2006/07)**

(54) **PROCEDE ET DISPOSITIF D'AMELIORATION DE LA MANOEUVRABILITE D'UN AERONEF LORS DES PHASES D'APPROCHE AVANT L'ATTERRISSAGE PUIS D'ARRONDI**

VERFAHREN UND VORRICHTUNG ZUR VERBESSERUNG DER MANÖVRIERFÄHIGKEIT EINES FLUGZEUGS WÄHREND DER ANFLUGPHASE VOR DER LANDUNG GEFOLGT VON DEM ABFANGEN

METHOD AND DEVICE FOR IMPROVING MANEUVERABILITY OF AN AIRCRAFT DURING APPROACH PHASES BEFORE LANDING FOLLOWED BY FLARE-OUT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.07.2004 FR 0407952**
**30.09.2004 US 614394**

(43) Date de publication de la demande:
**04.04.2007 Bulletin 2007/14**

(73) Titulaire: **Airbus Operations**
**31060 Toulouse (FR)**

(72) Inventeurs:
- **BOISSENIN, Stéphane**
**10avenue du Dr. Grynfogel**
**F-31100 Toulouse (FR)**
- **ROSAY, Jacques**
**F-31000 Toulouse (FR)**

(74) Mandataire: **Petit, Maxime**
**Santarelli**
**14, Avenue de la Grande Armée**
**BP 237**
**75822 Paris Cedex 17 (FR)**

(56) Documents cités:
**US-A- 3 589 648** **US-A- 3 738 594**
**US-A1- 2003 106 961**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 768 899 B1

## Description

La présente invention concerne l'amélioration de la manoeuvrabilité d'un aéronef lors des phases d'approche avant l'atterrissage puis d'arrondi, à l'aide d'une commande appropriée des volets déporteurs, aussi appelés aérofreins.

On entend ici par « amélioration de la manoeuvrabilité d'un l'aéronef » ce qui facilite la conduite de celui-ci.

La majeure partie des approches avant l'atterrissage, pour des avions de transport commercial, est effectuée sous une pente classique $\gamma$ de -3° environ.

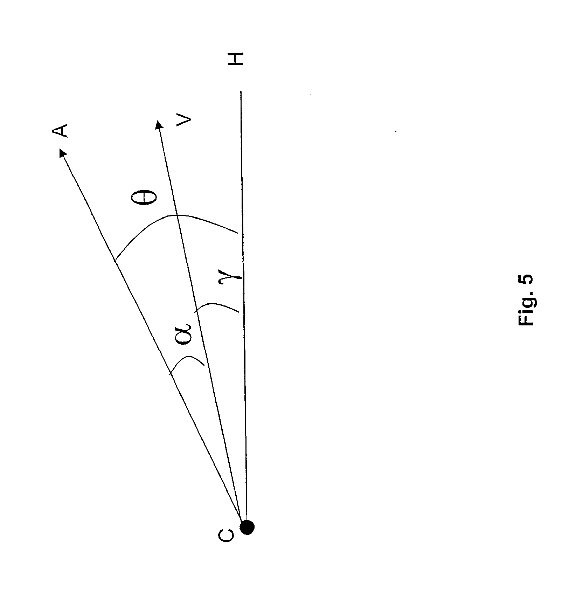

En référence à la **figure 5**, on rappelle que la pente $\gamma$ correspond à l'angle entre le vecteur vitesse V du centre de gravité C de l'aéronef et l'horizon H. L'assiette $\theta$ est l'angle entre l'axe avion A et l'horizon H et l'incidence $\alpha$ l'angle entre l'axe avion A et le vecteur vitesse V. La relation liant ces différents angles est la suivante : $\theta = \alpha + \gamma$.

D'une manière générale, la configuration aérodynamique d'un aéronef est modifiable à l'aide notamment des aérofreins, des volets et des becs.

Dans une phase d'approche avant l'atterrissage sous une pente dite classique de l'ordre de $\gamma$ = -3°, la configuration aérodynamique de l'aéronef résulte de ce que les aérofreins sont rentrés, les volets déployés et les becs déployés. Une telle configuration aérodynamique, associée à une vitesse d'approche donnée, impose à l'aéronef de voler à une certaine incidence, et donc à une certaine assiette. La majorité des approches en vue d'un atterrissage se faisant avec une pente classique de -3°, les pilotes ont l'habitude de réaliser à chaque fois le même atterrissage avec des angles d'incidence et d'assiette sensiblement similaires à chaque atterrissage. Comme en phase d'atterrissage le pilote ne peut détourner son attention en consultant les indicateurs de pente et d'incidence, il juge, en partie, le comportement de l'aéronef en fonction de l'assiette, en regardant l'attitude de l'aéronef vis-à-vis de l'environnement extérieur.

Le développement de certains aéroports situés dans des zones urbaines ainsi que les efforts associés à la réduction des nuisances sonores des aéronefs ont conduit à l'apparition de nouvelles procédures d'approche spécifiques. De telles procédures d'approche spécifiques imposent de plus en plus des pentes d'approche supérieures (en valeur absolue) à la pente classique de -3°. Typiquement, ces pentes d'approche spécifiques dites aussi à forte pente ont des valeurs plus faibles que -4,5°.

De manière à pouvoir tenir la pente requise, tout en conservant la vitesse de l'aéronef constante, pendant l'approche avant l'atterrissage, un équilibre traînée/poussée spécifique doit être obtenu. Une grande majorité des avions exploités dans ce genre d'approche est équipée d'hélices propulsives. Ce type de motorisation permet, grâce à l'orientation des hélices, d'obtenir le rapport de portance sur traînée nécessaire pour suivre la pente imposée.

Pour les avions équipés de turboréacteurs, il est nécessaire de faire appel à des artifices aérodynamiques pour obtenir le rapport portance sur trainée nécessaire.

Pour certains avions, on utilise les volets déporteurs (ou aérofreins). Les aérofreins constituent des surfaces aérodynamiques de contrôle, généralement installés à l'extrados des ailes, à l'arrière du caisson structural de celles-ci et en avant des volets de bord de fuite sur lesquels reposent leurs propres bords de fuite.

Sous l'action de moyens d'actionnement, par exemple des vérins hydrauliques, électriques ou mécaniques, eux-mêmes commandés par exemple à partir d'un levier actionné par le pilote de l'aéronef, lesdits aérofreins peuvent prendre :

- soit une position rétractée, pour laquelle ils sont logés dans l'extrados de l'aile correspondante en assurant la continuité aérodynamique dudit extrados ;
- soit l'une ou l'autre des positions déployées, pour lesquelles ils font saillies par rapport à l'extrados de l'aile correspondante, en étant inclinés par rapport audit extrados.

Ainsi, en position rétractée, lesdits aérofreins s'intègrent dans le profil aérodynamique des extrados des ailes de l'aéronef. En revanche, pour chacune des positions déployées, dont chacune d'elles est associée à une fonction spécifique et est définie par une valeur de l'angle de braquage par rapport à l'extrados correspondant, lesdits aérofreins entraînent une diminution de portance et une augmentation de traînée dont les amplitudes dépendent dudit angle de braquage et de la surface desdits aérofreins.

Ces aérofreins peuvent être utilisés à différentes fins telles que :

- réduction de la vitesse de l'aéronef lors de la fin des phases d'atterrissages et, éventuellement, d'interruption de décollage ;
- réduction de la vitesse de l'aéronef en vol ou augmentation de la pente de descente dudit aéronef ;
- plaquage de l'aéronef au sol pour améliorer le freinage pendant les phases d'atterrissage ou d'interruption de décollage ;
- en approche sous pente classique (-3°), asservissement (oscillation continue) du braquage des aérofreins sur une consigne (pente de l'aéronef par rapport à la trajectoire de descente, altitude, vitesse verticale) en fonction de l'écart entre la consigne et la position réelle de l'aéronef (US 3,589,648) ;

- contrôle en vol du roulis de l'aéronef en agissant de manière dissymétrique sur les aérofreins des deux ailes ;
- génération d'un moment de lacet par action dissymétrique sur les aérofreins des deux ailes participant à contrer les effets d'une panne de moteur pendant le décollage ; ou
- aide à la diminution du moment d'encastrement aile/fuselage, aux forts facteurs de charge (manoeuvres, rafales de vent) en modifiant la répartition de la portance le long des ailes.

Ainsi, les fonctions exercées par les aérofreins sont variées.

En diminuant le rapport portance sur traînée, braquer les aérofreins permet aussi d'augmenter la pente de descente à une vitesse donnée. Cela est déjà utilisé dans le cas d'une brusque décompression de l'aéronef ce qui oblige le pilote à redescendre à une altitude où les passagers peuvent respirer sans masque l'air ambiant.

Les inventeurs ont pensé utiliser cette propriété dans le cas d'une approche à forte pente. Ainsi, grâce au déploiement des aérofreins, les fortes pentes imposées par les aéroports situés dans des zones urbaines peuvent être suivies par les aéronefs.

Cependant les inventeurs ont constaté qu'au moment de l'arrondi (lorsque le pilote tire sur le manche pour redresser l'aéronef avant le toucher sur la piste d'atterrissage), l'aéronef, dans cette configuration est moins manoeuvrable. En effet, l'aéronef répond trop lentement à la demande du pilote que dans le cas où les aérofreins sont rétractés. Cela vient du fait que, pour redresser l'aéronef et casser la pente, il faut générer un facteur de charge plus important et que le temps imparti pour cette action est plus court que dans une approche classique. Pour générer ce facteur de charge, il faut augmenter l'incidence et donc l'assiette d'une valeur plus importante que dans une approche classique. Pour diminuer la pente jusqu'à une valeur qui garantit un impact suffisamment doux il faut aussi procéder à un changement d'assiette d'une valeur plus importante que dans une approche classique car la pente d'origine est plus importante. Ainsi, les prises d'assiette pendant l'arrondi sont presque deux fois plus importantes lors d'une approche sous forte pente que lors d'une approche classique. Plus la pente est importante et plus la variation d'assiette doit être importante. Ainsi, les références extérieures du pilote sont complètement modifiées et le pilotage dans cette phase de vol, dans ces conditions particulières, devient moins naturel et demande au pilote une phase d'adaptation et une attention accrue.

La présente invention remédie à ces inconvénients.

Elle porte sur un procédé d'amélioration de la manoeuvrabilité d'un aéronef lors des phases d'approche avant l'atterrissage puis d'arrondi, l'aéronef étant équipé d'aérofreins.

Selon une définition générale de l'invention, en cas d'aprroche sous forte pente, on met les aérofreins dans une première position déployée lors de la phase d'approche pour obtenir un angle d'incidence et, en fonction d'un paramètre représentatif d'une altitude donnée, on commande leur passage à une seconde position plus rétractée que la première position de sorte à conserver sensiblement ledit angle d'incidence de l'avion durant la phase d'arrondi.

Selon un autre aspect de l'invention, le procédé d'amélioration de la manoeuvrabilité d'un aéronef lors des phases d'approche avant l'atterrissage puis d'arrondi, l'aéronef étant équipé d'aérofreins, est caractérisé en ce qu'il comprend les étapes suivantes :

- prévoir des moyens d'actionnement des aérofreins et des moyens de commande aptes à commander lesdits moyens d'actionnement des aérofreins,
- mettre les aérofreins dans une première position déployée lors de la phase d'approche avant l'atterrissage pour obtenir un angle d'incidence de l'avion, et
- en fonction d'un paramètre représentatif d'une altitude donnée et en cas d'approche sous forte pente, commander automatiquement pour le début de la phase d'arrondi le passage des aérofreins à une seconde position plus rétractée que la première position de sorte à conserver sensiblement ledit angle d'incidence de l'avion durant la phase d'arrondi.

En d'autres termes, la rétraction des aérofreins de la première position à la seconde position selon l'invention permet d'obtenir un arrondi permettant de conserver sensiblement la même incidence, correspondant en cas d'approche sous forte pente à un arrondi avec des références extérieures de pilotage habituelles pendant la phase d'arrondi.

En pratique, la rétraction des aérofreins de la première position à la seconde position est irréversible jusqu'au chargement du train d'atterrissage.

Selon une autre réalisation, la rétraction des aérofreins de la première position à la seconde position est progressive.

Selon encore une autre réalisation, la rétraction des aérofreins est réalisée d'une première position totalement déployée jusqu'à une seconde position totalement rétractée.

En variante, la rétraction des aérofreins est réalisée d'une première position au moins partiellement déployée jusqu'à une seconde position au moins partiellement rétractée.

Selon une autre caractéristique, dans laquelle l'aéronef est équipé de volets de bord de fuite, le procédé comprend en outre l'étape dans laquelle on met les volets de bord de fuite dans une première position déployée lors de la phase d'approche avant l'atterrissage et, en fonction d'un paramètre représentatif d'une altitude donnée et en cas d'approche sous forte pente, on commande leur passage à une seconde position plus déployée que la première position.

En pratique, le déploiement des volets de bord de fuite de la première position à la seconde position est irréversible jusqu'au chargement du train d'atterrissage.

Selon une réalisation, la commande des volets de bord de fuite est automatique.

En pratique, le déploiement des volets de bord de fuite de la première position à la seconde position est progressif.

Par exemple, la commande des aérofreins et la commande des volets de bord de fuite sont conjuguées.

La présente invention a également pour objet un dispositif d'amélioration de la manoeuvrabitité d'un aéronef lors des phases d'approche avant l'atterrissage puis d'arrondi, l'aéronef étant équipé d'aérofreins.

Selon cet autre aspect de l'invention, le dispositif comprend des moyens d'actionnement pour mettre, en cas d'approche sous forte pente, les aérofreins dans une première position déployée lors de la phase d'approche pour obtenir un angle d'incidence de l'avion et, des moyens de commande aptes, en fonction d'un paramètre représentatif d'une altitude donnée et en cas d'approche sous forte pente, à commander, pour le début de la phase d'arrondi, les moyens d'actionnement pour faire passer les aérofreins à une seconde position plus rétractée que la première position de sorte à conserver sensiblement ledit angle d'incidence.

Selon un mode de réalisation de type manuel, les moyens de commande sont du type levier à commande manuelle tandis que les moyens d'actionnement comprennent un calculateur apte à piloter la rétraction des aérofreins en réponse à un ordre émis par le levier de commande.

Selon un autre aspect de l'invention, le dispositif comprend des moyens d'actionnement des aérofreins et des moyens de commande aptes à commander lesdits moyens d'actionnement des aérofreins, les moyens de commande étant aptes à mettre automatiquement les aérofreins dans une première position déployée lors de la phase d'approche et en ce qu'en fonction d'un paramètre représentatif d'une altitude donnée et en cas d'approche sous forte pente, les moyens de commande sont aptes à commander automatiquement leur passage à une seconde position plus rétractée que la première position.

En pratique, les moyens de commande sont du type calculateur apte à émettre un ordre de commande sur seuil d'altitude tandis que les moyens d'actionnement sont du type calculateur apte à piloter la rétraction des aérofreins en réponse audit ordre émis par les moyens de commande.

En variante, les moyens de commande sont du type calculateur apte à émettre un ordre de commande en fonction de l'altitude tandis que les moyens d'actionnement sont du type calculateur apte à piloter la rétraction des aérofreins en réponse audit ordre émis par les moyens de commande.

La présente invention a également pour objet un aéronef équipé d'aérofreins comprenant un dispositif d'amélioration de la manoeuvrabilité d'un aéronef lors des phases d'approche avant l'atterrissage puis d'arrondi du type visé ci-dessus.

D'autres caractéristiques et avantages de l'invention apparaîtront à la lumière de la description détaillée ci-après et des dessins dans lesquels :

- la **figure 1** montre, en vol et en perspective du dessus, un avion civil gros porteur ;
- la **figure 2** montre, en vue du dessus schématique, partielle et à plus grande échelle, une aile de l'avion de la **figure 1** avec ses volets déporteurs, ses becs de bord d'attaque et ses volets de bord de fuite en position rétractée ;
- la **figure 3** est une vue en coupe schématique, partielle et agrandie, selon la ligne III-III de la **figure 2** ;
- la **figure 4** montre, en vue semblable à la **figure 3**, un volet déporteur dans une position déployée ;
- la **figure 5**, déjà décrite précédemment, représente schématiquement la relation liant l'assiette, l'incidence et la pente d'un aéronef ;
- la **figure 6** est un diagramme illustrant, pour une configuration de l'avion de la **figure 1** en approche avant atterrissage, la variation du coefficient de portance de celui-ci en fonction de son incidence, les aérofreins étant non déployés pendant cette approche avant atterrissage. Elle montre aussi la variation de ce coefficient de portance pendant la phase d'arrondi (en trait gras) suivant une approche sous pente classique (-3°) ;
- la **figure 7** est un diagramme illustrant, pour une configuration dudit avion en approche avant atterrissage, la variation du coefficient de portance de celui-ci en fonction de son incidence, les aérofreins étant déployés pendant cette approche avant atterrissage. Elle montre aussi la variation de ce coefficient de portance pendant la phase d'arrondi (en trait gras) suivant une approche sous forte pente (-5,5°);
- la **figure 8** est un diagramme illustrant (en trait gras), pour une configuration dudit avion en approche avant atterrissage sous forte pente (-5°), la variation du coefficient de portance de celui-ci en fonction de son incidence pendant l'arrondi, les aérofreins étant progressivement rétractés d'une position déployée à une position plus rétractée que la première conformément à l'invention ;
- la **figure 9** est un diagramme illustrant la variation de la pente, de l'incidence et de l'assiette, pour une altitude évoluant, en fonction du temps, entre 40m et le sol ;
- la **figure 10** est un diagramme illustrant, pour une configuration dudit avion en approche avant atterrissage, l'effet d'un déploiement des volets de bord de fuite sur la variation du coefficient de portance de l'avion en fonction de son incidence, les volets de bord de fuite passant d'une première position déployée à une seconde position plus déployée que la première conformément à l'invention ;

- la **figure 11a** représente schématiquement un dispositif à commande manuelle conforme à l'invention pour l'amélioration de la manoeuvrabilité d'un aéronef de la **figure 1** lors des phases d'approche avant l'atterrissage puis d'arrondi ;
- la **figure 11b** représente schématiquement un dispositif à commande automatique conforme à l'invention pour l'amélioration de la manoeuvrabitité d'un aéronef de la **figure 1** lors des phases d'approche avant l'atterrissage puis d'arrondi ; et
- la **figure 11c** représente schématiquement une variante du dispositif de la **figure 11b.**

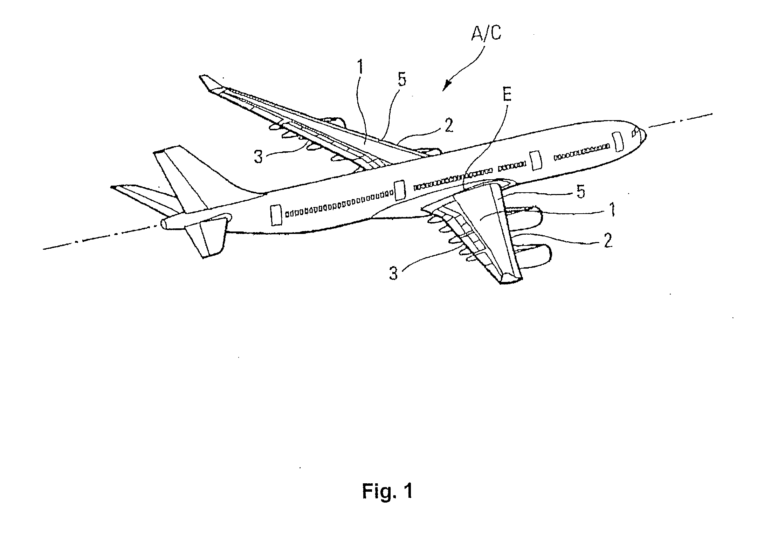

L'avion civil gros porteur A/C représenté sur la **figure 1** comporte deux ailes 1.

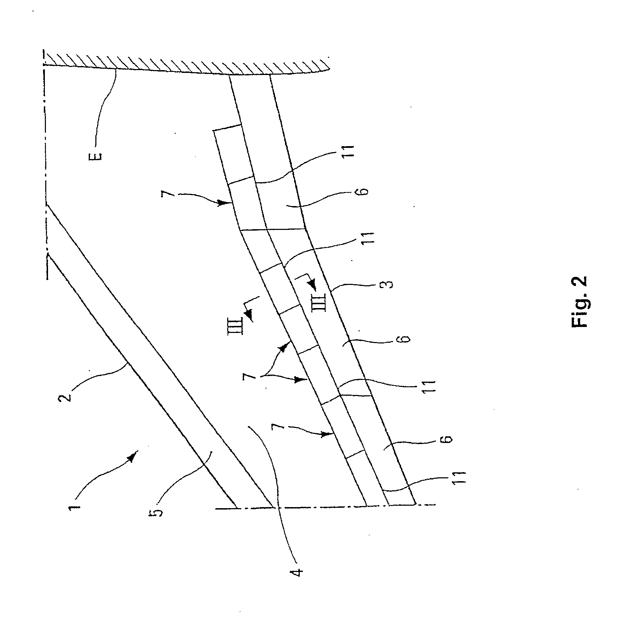

Comme le montre à plus grande échelle la **figure 2**, chaque aile 1 comporte un bord d'attaque 2, un bord de fuite 3, un extrados 4 et une emplanture E.

Le bord d'attaque 2 est formé par au moins un bec hypersustentateur 5.

Le bord de fuite 3 de l'aile 1 est formé par la juxtaposition des bords de fuite d'une pluralité de volets de bord de fuite, adjacents, 6.

Dans l'extrados 4, en amont des volets de bord de fuite 6 (par rapport à l'écoulement aérodynamique sur l'aile 1), est disposée une pluralité de volets déporteurs 7 dont la forme en plan est celle d'un rectangle ou d'un trapèze rectangle.

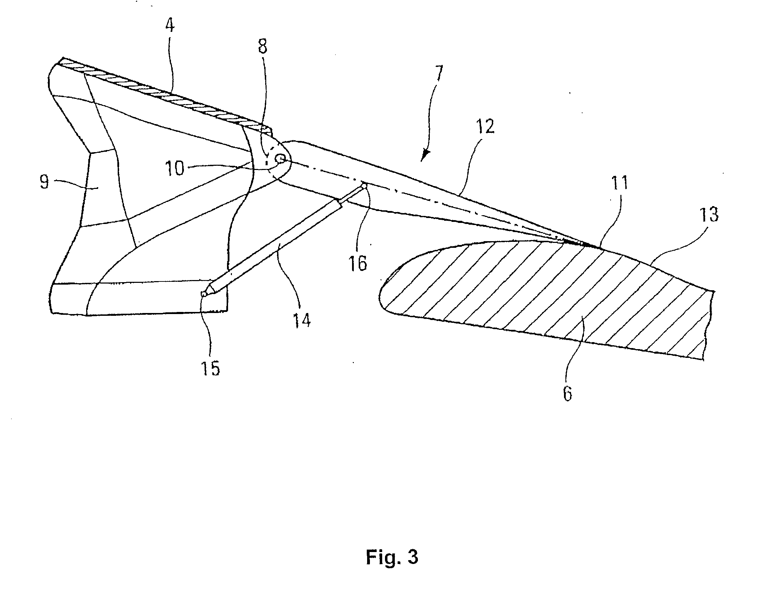

Comme le montre la **figure 3**, chaque volet déporteur 7 est articulé, du côté de son bord d'attaque 8, à la structure 9 de l'aile 1 autour d'un axe 10, parallèle audit bord d'attaque 8.

Dans la position rétractée représentée sur les **figures 2** et **3**, le bord de fuite 11 de chaque volet déporteur 7 s'appuie sur un volet de bord de fuite 6 et l'extrados 12 du volet déporteur 7 assure la continuité aérodynamique entre l'extrados 4 de l'aile 1 et l'extrados 13 du volet 6.

De plus, chaque volet déporteur 7 est relié à la structure 9 de l'aile 1 par une jambe inclinée constituée par un vérin 14, dont les extrémités 15 et 16 sont respectivement articulées sur ladite structure 9 et sur ledit volet déporteur 7.

En position rétractée du volet déporteur 7, comme décrit aux **figures 2** et **3**, le vérin 14 exerce un effort pour maintenir celui-ci en position rétractée.

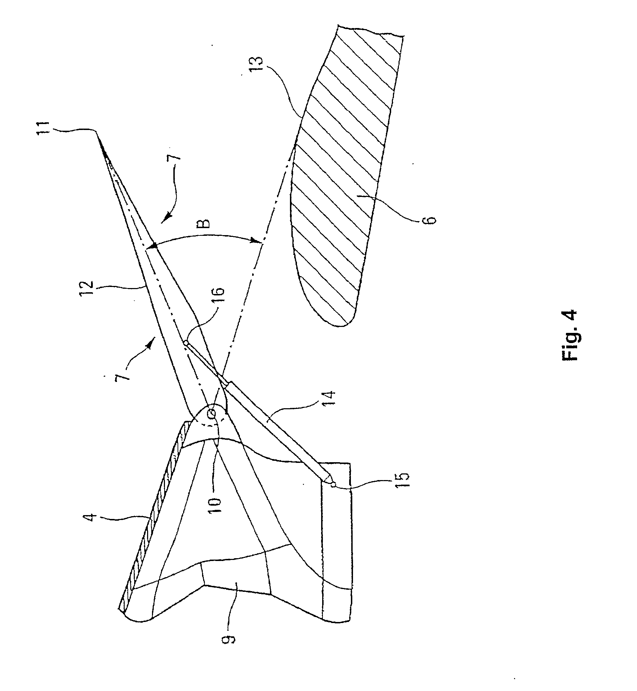

Lorsque le vérin 14 est activé à l'allongement, le volet déporteur 7 pivote progressivement autour de l'axe 10 en se déployant. Comme cela est montré sur la **figure 4**, pour une position déployée correspondant à un angle de braquage B, le volet déporteur 7 permet de diminuer la portance et d'augmenter la traînée de l'aile 1 en proportion de la valeur dudit angle de braquage B.

Bien entendu, bien que sur la **figure 4** on n'ait représenté qu'une seule position déployée correspondant à une valeur de l'angle de braquage B, il va de soi que le volet déporteur 7 peut occuper une ou plusieurs autres positions déployées correspondant à d'autres valeurs de cet angle.

Selon l'invention, les aérofreins sont commandés de façon appropriée lors des phases d'approche sous forte pente avant l'atterrissage et d'arrondi de manière à améliorer la manoeuvrabilité de l'aéronef.

En pratique, on met les aérofreins dans une première position déployée lors de la phase d'approche avant l'atterrissage et, à partir d'une altitude donnée et en cas d'approche sous forte pente, on commande leur passage à une seconde position plus rétractée que la première position.

La rétraction des aérofreins de la première position à la seconde position est irréversible jusqu'au chargement du train d'atterrissage. Un tel braquage sous forte pente ne s'accompagne pas d'une modification de la configuration de l'aéronef (poussée comme par exemple dans le document US 3,589,648 correspondant aux préambules des revendications indépendantes) afin de compenser l'action des aérofreins.

Le braquage des aérofreins est diminué, par exemple progressivement, jusqu'à un niveau acceptable pour le début de l'arrondi, les aérofreins continuant à rentrer pendant la suite de la manoeuvre jusqu'à atteindre la position totalement rétractée (position dite 0).

Par exemple, les aérofreins sont braqués à 30° pendant la phase d'approche puis commencent à rentrer à 40m du sol. Au début de l'arrondi (par exemple à 20m du sol), les aérofreins sont braqués par exemple à 15° et ils continuent à rentrer progressivement jusque 0° par exemple, valeur atteinte à 10m.

En pratique, la rétraction des aérofreins de la première position à la seconde position est irréversible jusqu'au chargement du train d'atterrissage.

La rétraction des aérofreins est par exemple automatique de façon à ne pas augmenter la charge de travail de l'équipage dans cette phase de vol critique.

En pratique, la commande de la rétraction des aérofreins est basée sur une information d'altitude.

L'altitude à laquelle l'ordre de rentrée est commandé par le système est par exemple calculée en fonction de la vitesse de rétraction des surfaces, de leur position de départ, de la position voulue au moment de l'arrondi et de la vitesse de descente verticale, de manière à ce que :

$$H_{ra}\,(ft) = H_{ar}\,(ft) + \frac{BA\,(°) - BF\,(°)}{RS(°/s)} * Vz\,(ft/s)$$

Équation dans laquelle :

BA : braquage des aérofreins pendant l'approche
BF : braquage désiré au moment de début de l'arrondi (par exemple 60ft soit 18m)
RS : vitesse de rétraction des aérofreins
Vz : vitesse verticale pendant l'approche
$H_{ra}$ : altitude rentrée aérofreins
$H_{ar}$ : altitude arrondie

La rétraction des aérofreins est compensée de façon conventionnelle par une action de la loi de pilotage sur la commande de tangage.

Avantageusement, le dispositif selon l'invention restitue au pilote les conditions d'environnement et les repères extérieurs qu'il a l'habitude d'appréhender lors d'approches classiques (pente de l'ordre de -3° ou analogue), tout en pouvant utiliser les aérofreins dans la phase de descente, pour augmenter la pente de l'avion.

De plus, en ramenant l'avion dans une configuration aérodynamique « habituelle », on restitue également une manoeuvrabilité connue et satisfaisante.

En d'autres termes, la rétraction des aérofreins a pour fonction de réaliser un arrondi permettant de conserver sensiblement la même incidence. Ainsi dans le cadre d'un arrondi suivant une approche sous forte pente, la rétraction des aérofreins a pour fonction de réaliser une manoeuvre (l'arrondi) avec des références (notamment des références extérieures visuelles) sensiblement identiques à ce que les équipages appréhendent lors d'arrondi suivant des approches classiques (pentes -3°). En effet, la portance nécessaire à la cassure de trajectoire est générée sans augmenter significativement l'incidence, uniquement en modifiant la configuration aérodynamique de l'aéronef et notamment en rentrant les aérofreins.

Cette génération de portance « directe » en rentrant les aérofreins est plus rapide et offre davantage de manoeuvrabilité dans cette phase de vol critique.

La cassure de la trajectoire peut donc être directement perçue par le pilote comme une variation d'assiette, avec des valeurs tout à fait comparables à celles des approches classiques, à faible pente telle que -3°.

L'application du dispositif conforme à l'invention est par exemple faite sur un Airbus A318, qui vise des approches avant atterrissage sous fortes pentes, par exemple jusqu'à -5.5°.

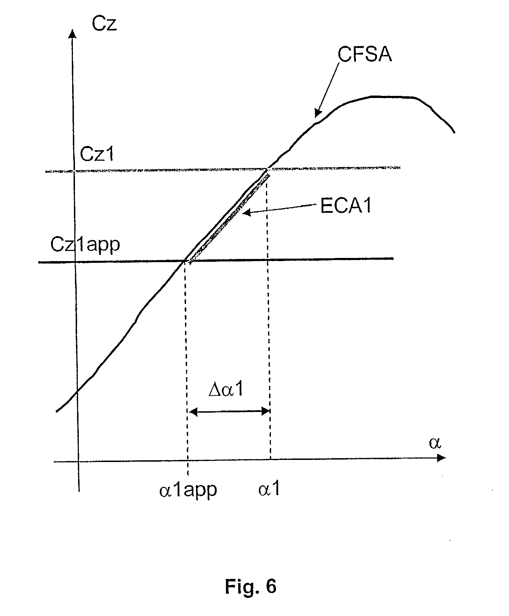

En référence à la **figure 6**, on a décrit un diagramme illustrant, pour une configuration d'un avion en approche avant atterrissage sous faible pente, la variation du coefficient de portance de celui-ci en fonction de son incidence.

Les aérofreins sont ici rentrés. La courbe CFSA correspond à la configuration dynamique dite « sans les aérofreins », c'est-à-dire aérofreins totalement rentrés.

On a représenté aussi sur ce diagramme, en trait gras, la variation ECA1 correspondant à la variation du coefficient de portance pendant la phase d'arrondi.

En approche sous faible pente ($\gamma l$ = -3°), l'incidence $\alpha 1$ app correspond à un coefficient de portance d'approche Cz1app. Par exemple l'incidence $\alpha 1$app est d'environ 8°.

L'incidence $\alpha 1$ pour l'arrondi correspond à un coefficient de portance nécessaire pour l'arrondi Cz1, Cz1 étant le coefficient de portance nécessaire pour générer le facteur de charge utile pour casser suffisamment la pente de - 3°. Par exemple $\alpha 1$ est de 9,5°. La pente en fin d'arrondi est par exemple égale à -1°.

La variation d'incidence $\Delta\alpha 1$ ($\alpha 1$ - $\alpha 1$app) pendant l'arrondi est par exemple de 1,5°.

L'assiette $\theta 1$ au toucher des roues est par exemple environ 8,5°. La variation d'assiette $\Delta\theta 1$ pendant l'arrondi est par exemple de 3,5°.

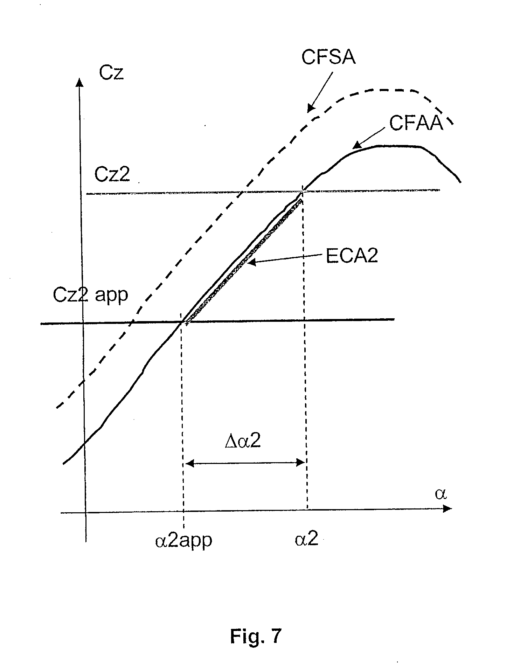

En référence à la **figure 7**, l'avion est en approche avant atterrissage sous forte pente (par exemple y2 = -5,5°).

Les aérofreins sont ici déployés pendant les phases d'approche avant l'atterrissage et d'arrondi. La courbe CFAA en traits continus correspond à la configuration dynamique dite « avec les aérofreins déployés ».

On a représenté également en pointillés la courbe CFSA sans les aérofreins.

On a représenté aussi sur ce diagramme, en trait gras, la variation ECA2 correspondant à la variation du coefficient de portance pendant la phase d'arrondi.

L'incidence $\alpha 2$app correspond à un coefficient de portance d'approche Cz2app. Par exemple l'incidence $\alpha 2$app est environ 9°.

L'incidence $\alpha 2$ pour l'arrondi correspond à un coefficient de portance nécessaire pour l'arrondi Cz2, Cz2 étant le coefficient de portance nécessaire pour générer le facteur de charge utile pour casser suffisamment la pente de -5,5°. Par exemple $\alpha 2$ est de 1.2°.

La variation d'incidence $\Delta\alpha 2$ ($\alpha 2$ - a2app) pendant l'arrondi est par exemple de 3°.

L'assiette $\theta 2$ au toucher des roues est par exemple environ 11 °. La variation d'assiette $\Delta\theta 2$ pendant l'arrondi est par exemple de 7,5°.

La variation d'assiette $\Delta\theta 2$ est ici importante et significativement différente de la variation d'assiette observée dans le cas précédent d'un arrondi suivant une approche sous pente classique de -3°, ce qui rend la manoeuvrabilité de l'aéronef délicate.

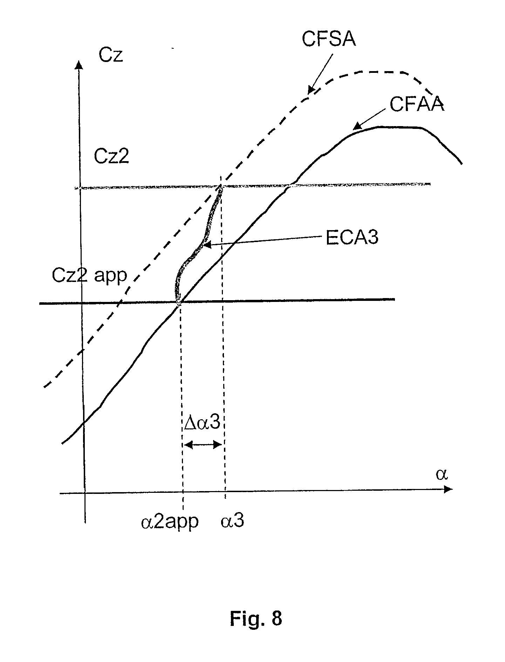

En référence à la **figure 8**, l'avion est en approche d'atterrissage sous forte pente ($\gamma 2$ = -5,5°).

Les aérofreins passent de la position déployée (courbe CFAA) à la position rétractée (courbe CFSA) conformément à l'invention pendant les phases d'approche avant l'atterrissage et d'arrondi. Ce passage d'une courbe à l'autre correspond au braquage des aérofreins d'une position déployée à une position plus rétractée. Par exemple, ce braquage est progressif à une vitesse de l'ordre de 5° par seconde.

On a représenté aussi sur ce diagramme, en trait gras, la variation ECA3 correspondant à la variation du coefficient de portance pendant la phase d'arrondi.

L'incidence $\alpha$2app correspond à un coefficient de portance d'approche Cz2app. Par exemple l'incidence $\alpha$2app est environ 9°.

L'incidence pour l'arrondi correspond maintenant à l'incidence nécessaire pour obtenir un coefficient de portance Cz2 sur la courbe CFSA, c'est-à-dire $\alpha 3$ = 9,5°.

La variation d'incidence $\Delta\alpha 3$ pendant l'arrondi ($\alpha 3$ - a2app) est donc de 0,5° (c'est-à-dire permettant de conserver sensiblement la même incidence).

Ainsi, avec une assiette $\theta 2$= 03 en approche égale à 3,5°, on obtient selon l'invention une variation d'assiette $\Delta\theta 3$ pendant l'arrondi de 5°.

L'application numérique montre ainsi que la variation d'assiette pendant l'arrondi ($\Delta\theta 3$ = 5°) avec le dispositif conforme à l'invention lors d'une approche sous forte pente ($\gamma$ =-5,5°) est plus faible que la variation d'assiette pendant l'arrondi ($\Delta\theta 2$ = 7,5°) sans le dispositif selon l'invention lors d'une approche sous forte pente. La variation d'assiette est donc comparable à celle obtenue ($\Delta\theta 1$ = 3,5°) sous faible pente.

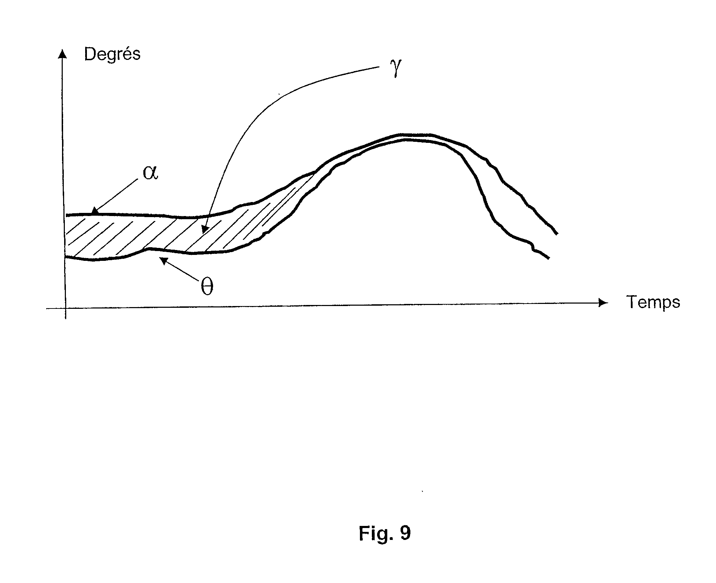

En référence à la **figure 9**, on a décrit la variation de la pente, de l'incidence et de l'assiette, pour une altitude évoluant, en fonction du temps, entre 40m et le sol. On voit que la variation de pente est directement liée à la variation d'assiette et d'incidence.

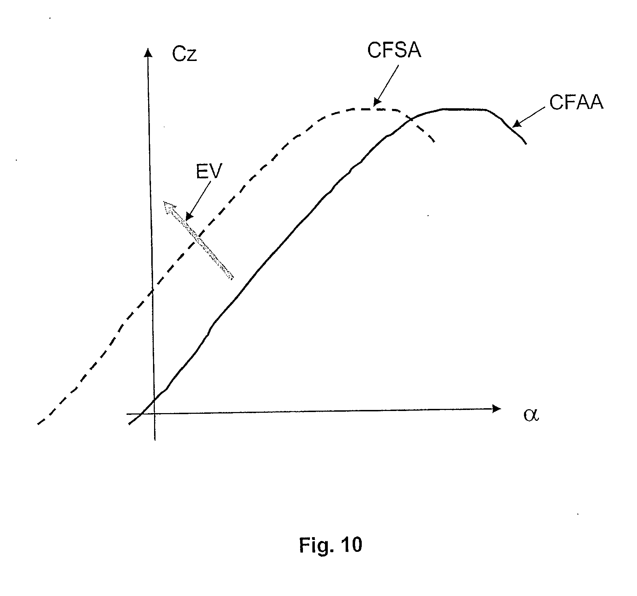

En référence à la **figure 10**, on a représenté les courbes CFSA et CFAA décrites en références aux **figures 6** à **8**.

Une amélioration de la manoeuvrabitité d'un aéronef lors des phases d'approche sous forte pente avant l'atterrissage puis d'arrondi, peut également être obtenue à l'aide d'une commande appropriée des volets de bord de fuite. Cette amélioration est similaire à celle obtenue à l'aide de la commande des aérofreins décrite ci-dessus.

Ainsi, on met les volets de bord de fuite dans une première position déployée lors de la phase d'approche avant l'atterrissage et, à partir d'une altitude donnée et en cas d'approche sous forte pente, on commande leur passage à une seconde position plus déployée que la première position.

Les volets de bord de fuite passent de la position déployée (courbe CFAA) à la position déployée supérieure (courbe CFSA) conformément à l'invention pendant les phases d'approche avant l'atterrissage et d'arrondi. Ce passage EV d'une courbe à l'autre correspond au braquage des volets de bord de fuite d'une position déployée à une position plus déployée. Par exemple, ce braquage est progressif à une vitesse de l'ordre de 5° par seconde.

Par exemple, la commande des volets de bord de fuite est automatique.

En pratique, le déploiement des volets de bord de fuite de la première position à la seconde position est progressif.

Par exemple, la commande des aérofreins et la commande des volets de bord de fuite sont conjuguées.

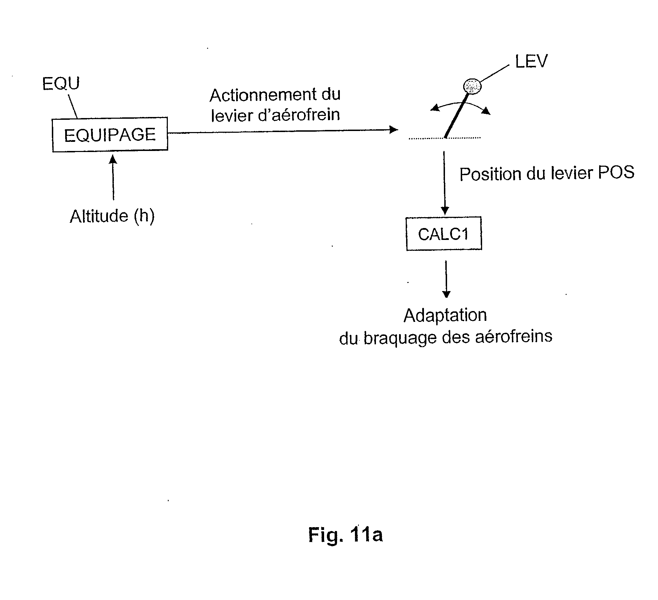

En référence à la **figure 11a**, on a décrit un dispositif à activation manuelle de la rentrée des aérofreins.

L'avion comprend un calculateur de commande de vol, CALC1.

Au vu d'un paramètre choisi, en pratique l'altitude de l'avion, l'équipage EQU commande manuellement, par action sur le levier de commande LEV des aérofreins, la position POS (rentrée totale par exemple) des aérofreins. La position du levier POS est acquise par le calculateur de commande de vol CALC1 qui commande en réponse le braquage (rétraction) des aérofreins. En pratique, la rétraction est progressive, par exemple 5° par seconde.

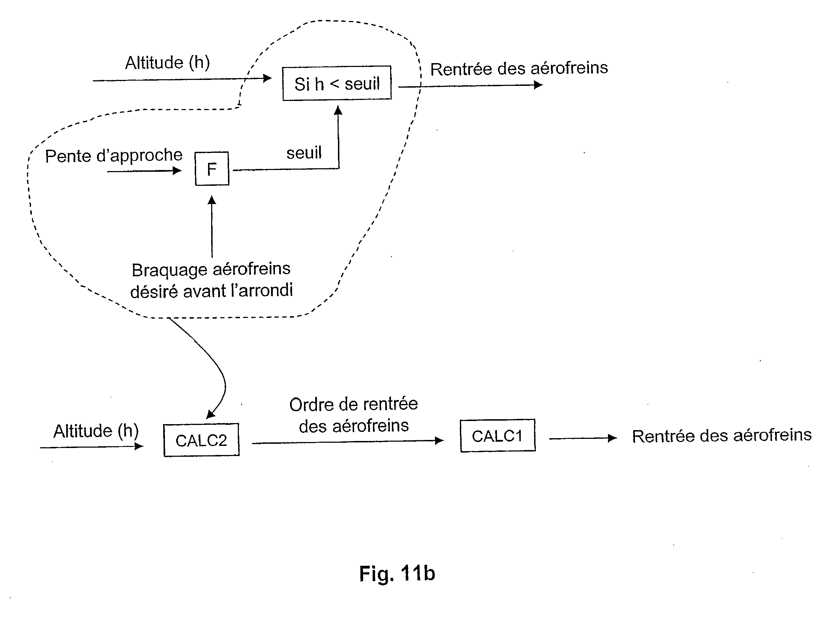

En référence à la **figure 11b**, on a décrit un déclenchement sur seuil d'altitude et actionnement automatique des aérofreins.

Il. s'agit d'un mode de réalisation plus évolué (rentrée automatique des aérofreins), dont l'avantage est de réduire la charge de travail de l'équipage.

La logique contenant le seuil en altitude et le braquage d'aérofreins à adopter en fonction de cette altitude est contenue dans un calculateur CALC2.

L'ordre de rentrée des aérofreins (à 0 ou une autre position prédéterminée) est ensuite envoyé vers le calculateur CALC1 qui gère et pilote le braquage des aérofreins.

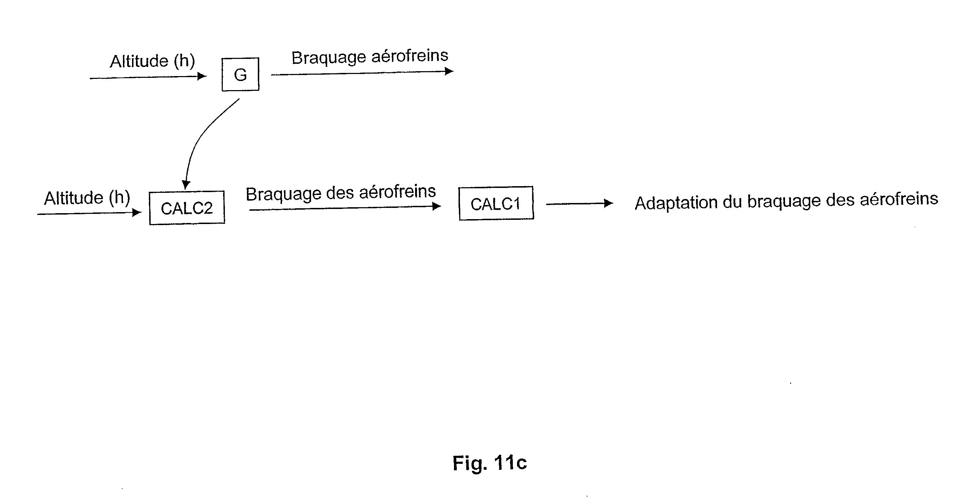

En référence à la figure **11c**, on a décrit une variante du mode de fonctionnement précédent pour lequel la position des aérofreins est une fonction continue de l'altitude. On ne commande plus une position d'aérofrein donnée à partir d'une altitude donnée comme décrit en référence à la **figure 11b**, mais on commande une position d'aérofrein donnée pour une altitude donnée.

La fonction G est une fonction continue de l'altitude : à chaque altitude correspond un braquage d'aérofrein.

La logique associée à cette fonction est établie dans le calculateur CALC2. La position aérofreins ainsi déterminée par le calculateur CALC2 est envoyée vers le calculateur CALC1 qui commande la position des aérofreins.

## Revendications

**1.** Procédé d'amélioration de la manoeuvrabiiité d'un aéronef lors des phases d'approche avant l'atterrissage puis d'arrondi, l'aéronef étant équipé d'aérofreins (7), dans lequel, en cas d'approche sous forte pente, l'on met les aérofreins dans une première position déployée lors de la phase d'approche pour obtenir un angle d'incidence ($\alpha$2app) de l'avion, **caractérisé en ce qu'**en fonction d'un paramètre représentatif d'une altitude donnée, on commande, pour le début de la phase d'arrondi, leur passage à une seconde position plus rétractée que la première position de sorte à conserver sensiblement ledit angle d'incidence de l'avion durant la phase d'arrondi.

**2.** Procédé d'amélioration de la manoeuvrabilité d'un aéronef lors des phases d'approche avant l'atterrissage puis d'arrondi, l'aéronef étant équipé d'aérofreins (7), comprenant, en cas d'approche sous forte pente, les étapes suivantes :

- prévoir des moyens d'actionnement des aérofreins et des moyens de commande aptes à commander lesdits moyens d'actionnement des aérofreins,
- mettre les aérofreins dans une première position déployée lors de la phase d'approche avant l'atterrissage pour obtenir un angle d'incidence ($\alpha$2app) de l'avion,
- **caractérisé en ce que** le procédé comprend l'étape de, en fonction d'un paramètre représentatif d'une altitude donnée, commander automatiquement, pour le début de la phase d'arrondi, le passage des aérofreins à une seconde position plus rétractée que la première position de sorte à conserver sensiblement ledit angle d'incidence de l'avion durant la phase d'arrondi.

**3.** Procédé selon la revendication 1 ou la revendication 2, dans lequel la rétraction des aérofreins est réalisée de manière à obtenir un arrondi avec des références extérieures de pilotage habituelles pendant la phase d'arrondi sous pente classique.

**4.** Procédé selon la revendication 1 ou la revendication 2, dans lequel la rétraction des aérofreins de la première position à la seconde position est irréversible jusqu'au chargement du train d'atterrissage.

**5.** Procédé selon la revendication 1 ou la revendication 2, dans lequel la rétraction des aérofreins est progressive.

**6.** Procédé selon la revendication 1 ou la revendication 2, **caractérisé en ce que** la rétraction des aérofreins est réalisée d'une première position totalement déployée jusqu'à une seconde position totalement rétractée.

**7.** Procédé selon la revendication 1 ou la revendication 2, **caractérisé en ce que** la rétraction des aérofreins est réalisée d'une première position au moins partiellement déployée jusqu'à une seconde position au moins partiellement rétractée.

**8.** Procédé selon l'une quelconque des revendications 1 à 7, dans lequel l'aéronef est équipé de volets de bord de fuite, le procédé comprenant en outre l'étape dans laquelle on met les volets de bord de fuite dans une première position déployée lors de la phase d'approche avant l'atterrissage et, en fonction d'un paramètre représentatif d'une altitude donnée et en cas d'approche sous forte pente, on commande leur passage à une seconde position plus déployée que la première position.

**9.** Procédé selon la revendication 8, dans lequel le déploiement des volets de bord de fuite de la première position à la seconde position est irréversible jusqu'au chargement du train d'atterrissage.

10. Procédé selon la revendication 8, dans lequel la commande des volets de bord de fuite est automatique.

11. Procédé selon la revendication 8 ou la revendication 10, dans lequel le déploiement des volets de bord de fuite est progressif.

12. Procédé selon la revendication 1 et la revendication 8, dans lequel la commande des aérofreins et la commande des volets de bord de fuite sont conjuguées.

13. Dispositif d'amélioration de la manoeuvrabilité d'un aéronef lors des phases d'approche avant l'atterrissage puis d'arrondi, l'aéronef étant équipé d'aérofreins (7), comprenant des moyens d'actionnement (CALC1) pour mettre, en cas d'approche sous forte pente, les aérofreins dans une première position déployée lors de la phase d'approche pour obtenir un angle d'incidence ($\alpha$2app) de l'avion et des moyens de commande (LEV), **caractérisé en ce que** les moyens de commande (LEV) sont aptes, en fonction d'un paramètre représentatif d'une altitude donnée et en cas d'approche sous forte pente, à commander, pour le début de la phase d'arrondi, les moyens d'actionnement (CALC1) pour faire passer les aérofreins à une seconde position plus rétractée que la première position de sorte à conserver sensiblement ledit angle d'incidence de l'avion durant la phase d'arrondi.

14. Dispositif selon la revendication 13, dans lequel les moyens de commande (LEV) sont du type levier à commande manuelle tandis que les moyens d'actionnement (CALC1) comprennent un calculateur apte à piloter la rétraction des aérofreins en réponse à un ordre émis par le levier de commande (LEV).

15. Dispositif d'amélioration de la manoeuvrabitité d'un aéronef lors des phases d'approche avant l'atterrissage puis d'arrondi, l'aéronef étant équipé d'aérofreins (7), comprenant des moyens d'actionnement des aérofreins (CALC1) et des moyens de commande (CALC2) aptes à commander lesdits moyens d'actionnement des aérofreins, les moyens de commande (CALC2) étant aptes à mettre automatiquement, en cas d'approche sous forte pente, les aérofreins dans une première position déployée lors de la phase d'approche pour obtenir un angle d'incidence ($\alpha$2app) de l'avion, **caractérisé en ce qu'**en fonction d'un paramètre représentatif d'une altitude donnée et en cas d'approche sous forte pente, les moyens de commande (CALC2) sont aptes à commander automatiquement, pour le début de la phase d'arrondi, leur passage à une seconde position plus rétractée que la première position de sorte à conserver sensiblement ledit angle d'incidence de l'avion durant la phase d'arrondi,

16. Dispositif selon la revendication 15, dans lequel les moyens de commande (CALC2) sont du type calculateur apte à émettre un ordre de commande sur seuil d'altitude tandis que les moyens d'actionnement (CALC1) sont du type calculateur apte à piloter la rétraction des aérofreins en réponse audit ordre émis par les moyens de commande (CALC2).

17. Dispositif selon la revendication 15, dans lequel les moyens de commande (CALC2) sont du type calculateur apte à émettre un ordre de commande en fonction (G) de l'altitude tandis que les moyens d'actionnement sont du type calculateur (CALC1) apte à piloter la rétraction des aérofreins en réponse audit ordre émis par les moyens de commande (CALC2).

18. Aéronef équipé d'aérofreins comprenant un dispositif d'amélioration de la manoeuvrabiiité d'un aéronef lors des phases d'approche sous forte pente avant l'atterrissage puis d'arrondi selon la revendication 13 ou la revendication 14.

19. Aéronef équipé d'aérofreins et de moyens de commande automatique desdits aérofreins comprenant un dispositif d'amélioration de la manoeuvrabiiité d'un aéronef lors des phases d'approche sous forte pente avant l'atterrissage puis d'arrondi selon l'une des revendications 15 à 17,

## Patentansprüche

1. Verfahren zur Verbesserung der Manövrierfähigkeit eines Luftfahrzeugs während der Phase des Anflugs vor der Landung gefolgt von der Phase des Abfangens, wobei das Luftfahrzeug mit Luftbremsen (7) ausgestattet ist, bei welchem im Falle eines Steilanflugs die Luftbremsen in eine ausgefahrene, erste Stellung bei der Anflugphase gebracht werden, um einen Anstellwinkel ($\alpha$2app) des Flugzeugs zu erhalten,
**dadurch gekennzeichnet, dass** in Abhängigkeit von einem für eine gegebene Höhe repräsentativen Parameter für den Beginn der Abfangphase deren Übergang in eine zweite, weiter eingefahrene Stellung als die erste Stellung gesteuert wird, so dass im Wesentlichen der genannte Anstellwinkel des Flugzeugs während der Abfangphase beibehalten wird.

2. Verfahren zur Verbesserung der Manövrierfähigkeit eines Luftfahrzeugs während der Phase des Anflugs vor der Landung gefolgt von der Phase des Abfangens, wobei das Luftfahrzeug mit Luftbremsen (7) ausgestattet ist, das im Falle eines Steilanflugs die nachfolgenden Schritte umfasst:

- Vorsehen von Mitteln zum Betätigen der Luftbremsen und von Steuerungsmitteln, die dazu geeignet sind, die Mittel zum Betätigen der Luftbremsens zu steuern,
- Verbringen der Luftbremsen in eine ausgefahrene, erste Stellung bei der Anflugphase vor der Landung, um einen Anstellwinkel ($\alpha 2app$) des Luftzeugs zu erhalten,

**dadurch gekennzeichnet, dass**
das Verfahren in Abhängigkeit von einem für eine gegebene Höhe repräsentativen Parameter für den Beginn der Abfangphase den Schritt der automatischen Steuerung des Übergangs der Luftbremsen in eine zweite, weiter eingefahrene Stellung als die erste Stellung umfasst, so dass im Wesentlichen der genannte Anstellwinkel des Flugzeugs während der Abfangphase beibehalten wird.

3. Verfahren nach Anspruch 1 oder Anspruch 2, wobei das Einfahren der Luftbremsen so erfolgt, dass ein Abfangen mit den gewöhnlichen Außenbezugspunkten der Steuerung während der Abfangphase mit gewöhnlicher Neigung erreicht wird.

4. Verfahren nach Anspruch 1 oder Anspruch 2, wobei das Einfahren der Luftbremsen von der ersten Stellung in die zweite Stellung bis zum Belasten des Fahrwerks irreversibel ist.

5. Verfahren nach Anspruch 1 oder Anspruch 2, wobei das Einfahren der Luftbremsen progressiv erfolgt.

6. Verfahren nach Anspruch 1 oder Anspruch 2,
**dadurch gekennzeichnet, dass**
das Einfahren der Luftbremsen aus einer vollständig ausgefahrenen, ersten Stellung bis in eine vollständig eingefahrene, zweite Stellung erfolgt.

7. Verfahren nach Anspruch 1 oder Anspruch 2,
**dadurch gekennzeichnet, dass**
das Einfahren der Luftbremsen aus einer zumindest teilweise ausgefahrenen, ersten Stellung bis in eine zumindest teilweise eingefahrene, zweite Stellung erfolgt.

8. Verfahren nach einem der Ansprüche 1 bis 7, wobei das Luftfahrzeug mit Hinterkantenklappen ausgestattet ist, wobei das Verfahren ferner den Schritt umfasst, bei dem während der Anflugphase vor der Landung die Hinterkantenklappen in eine ausgefahrene, erste Stellung gebracht werden und in Abhängigkeit von einem für eine gegebene Höhe repräsentativen Parameter und im Falle eines Steilanflugs deren Übergang in eine zweite, weiter ausgefahrene Stellung als die erste Stellung gesteuert wird.

9. Verfahren nach Anspruch 8, wobei das Ausfahren der Hinterkantenklappen von der ersten Stellung in die zweite Stellung bis zum Belasten des Fahrwerks irreversibel ist.

10. Verfahren nach Anspruch 8, wobei die Steuerung der Hinterkantenklappen automatisch erfolgt.

11. Verfahren nach Anspruch 8 oder Anspruch 10, wobei das Ausfahren der Hinterkantenklappen progressiv erfolgt.

12. Verfahren nach Anspruch 1 oder Anspruch 8, wobei die Steuerung der Luftbremsen und die Steuerung der Hinterkantenklappen zusammenfallen.

13. Vorrichtung zur Verbesserung der Manövrierfähigkeit eines Luftfahrzeugs während der Phase des Anflugs vor der Landung gefolgt von der Phase des Abfangens, wobei das Luftfahrzeug mit Luftbremsen (7) ausgestattet ist, umfassend Betätigungsmittel (CALC1), um im Falle eines Steilanflugs die Luftbremsen in eine ausgefahrene, erste Stellung bei der Anflugphase gebracht werden, um einen Anstellwinkel ($\alpha 2app$) des Flugzeugs zu erhalten, sowie Steuerungsmittel (LEV),

**dadurch gekennzeichnet, dass**
die Steuerungsmittel (LEV) geeignet sind, in Abhängigkeit von einem für eine gegebene Höhe repräsentativen Parameter und im Falle eines Steilanflugs für den Beginn der Abfangphase die Betätigungsmittel (CALC1) so zu steuern, dass die Luftbremsen in eine zweite Stellung überführt werden, die weiter eingefahren als die erste Stellung ist, so dass im Wesentlichen der genannte Anstellwinkel des Flugzeugs während der Abfangphase beibehalten wird.

**14.** Vorrichtung nach Anspruch 13, wobei die Steuerungsmittel (LEV) nach Art eines Hebels mit manueller Steuerung ausgebildet sind, während die Betätigungsmittel (CALC1) einen Rechner enthalten, der dazu geeignet ist, das Einfahren der Luftbremsen in Reaktion auf einen von dem Steuerungshebel (LEV) ausgegebenen Befehl anzusteuern.

**15.** Vorrichtung zur Verbesserung der Manövrierfähigkeit eines Luftfahrzeugs während der Phase des Anflugs vor der Landung gefolgt von der Phase des Abfangens, wobei das Luftfahrzeug mit Luftbremsen (7) ausgestattet ist, umfassend Betätigungsmittel (CALC1) zum Betätigen der Luftbremsen und Steuerungsmittel (CALC2), die dazu geeignet sind, die Betätigungsmittel zum Betätigen der Luftbremsen zu steuern, wobei die Steuerungsmittel (CALC2) dazu geeignet sind, im Falle eines Steilanflugs die Luftbremsen automatisch in eine ausgefahrene, erste Stellung bei der Anflugphase zu bringen, um einen Anstellwinkel ($\alpha$2app) des Flugzeugs zu erhalten,
**dadurch gekennzeichnet, dass**
in Abhängigkeit von einem für eine gegebene Höhe repräsentativen Parameter und im Falle eines Steilanflugs die Steuerungsmittel (CALC2) dazu geeignet sind, für den Beginn der Abfangphase deren Übergang in eine weiter als die erste Stellung eingefahrene, zweite Stellung zu überführen, so dass im Wesentlichen der genannte Anstellwinkel des Flugzeugs während der Abfangphase beibehalten wird.

**16.** Vorrichtung nach Anspruch 15, wobei die Steuerungsmittel (CALC2) nach Art eines Rechners ausgeführt sind, der dazu geeignet ist, einen Steuerbefehl bei einem Höhengrenzwert auszugeben, während die Betätigungsmittel (CALC1) nach Art eines Rechners ausgeführt sind, der dazu geeignet ist, das Einfahren der Luftbremsen in Reaktion auf den von den Steuerungsmitteln (CALC2) ausgegebenen Befehl anzusteuern.

**17.** Vorrichtung nach Anspruch 15, wobei die Steuerungsmittel (CALC2) nach Art eines Rechners ausgeführt sind, der dazu geeignet ist, einen Steuerbefehl in Abhängigkeit (G) von der Höhe auszugeben, während die Betätigungsmittel (CALC1) nach Art eines Rechners ausgeführt sind, der dazu geeignet ist, das Einfahren der Luftbremsen in Reaktion auf den von den Steuerungsmitteln (CALC2) ausgegebenen Befehl anzusteuern.

**18.** Luftfahrzeug, das mit Luftbremsen ausgestattet ist, umfassend eine Vorrichtung zur Verbesserung der Manövrierfähigkeit eines Luftfahrzeugs während der Phase des Steilanflugs vor der Landung gefolgt von der Phase des Abfangens nach Anspruch 13 oder Anspruch 14.

**19.** Luftfahrzeug, das mit Luftbremsen und Steuerungsmitteln zur automatischen Steuerung der Luftbremsen ausgestattet ist, umfassend eine Vorrichtung zur Verbesserung der Manövrierfähigkeit eines Luftfahrzeugs während der Phase des Steilanflugs vor der Landung gefolgt von der Phase des Abfangens nach einem der Ansprüche 15 bis 17.

## Claims

**1.** A process for improving the maneuverability of an aircraft during an approach phase to landing and then a flare-out phase, the aircraft being equipped with air brakes (7), wherein in case of a required steep flight path angle of the approach phase, the air brakes are put in a first deployed position during the approach phase to obtain an angle of incidence ($\alpha$2app) of the aircraft, **characterized in that** as a function of a representative parameter of a given altitude for the beginning of the flare-out phase, the actuation of their transition to a second more retracted position than the first position is controlled to substantially maintain the said angle of incidence of the aircraft during the flare-out phase.

**2.** A process for improving the maneuverability of an aircraft during an approach phase to landing and then a flare-out phase, the aircraft being equipped with air brakes (7), wherein said process includes in case of a required steep flight path angle of the approach phase the following steps:

- providing means for actuating the air brakes and control devices capable of controlling said means for actuating the air brakes,
- putting the air brakes in a first deployed position during the approach phase to landing to obtain an angle of

incidence ($\alpha$2app) of the aircraft,
- **characterized in that** the process comprises as a function of a representative parameter of a given altitude, for the beginning of the flare-out phase, the step of actuating automatically a progressive transition of the air brakes to a second more retracted position than the first position to substantially maintain the said angle of incidence of the aircraft during the flare-out phase.

**3.** A process according to claim 1 or claim 2, wherein the retraction of the airbrakes is realized so that the aircraft achieves a flare-out with classical exterior piloting references during the flare-out phase in case of a classical angle approach.

**4.** A process according to claim 1 or claim 2, wherein the retraction of the air-brakes from the first position to the second position is not reversible until the landing gear is under load.

**5.** A process according to claim 1 or claim 2, in which the retraction of the air brakes is progressive.

**6.** A process according to claim 1 or claim 2, **characterized in that** the retraction of the air brakes is made from a first completely deployed position to a second completely retracted position.

**7.** A process according to claim 1 or claim 2, **characterized in that** the retraction of the air brakes is made from a first at least partially deployed position to a second, at least partially retracted position.

**8.** A process according to any one of claims 1 to 7, in which the aircraft is equipped with trailing edge flaps, the process including also the step in which the trailing edge flaps are put into a first deployed position during the approach phase to landing and, as a function of a representative parameter of a given altitude and in case of a steep angle approach, their transition to a second more deployed position than the first position is actuated.

**9.** A process according to claim 8, wherein the deployment of the trailing edge flaps from the first position to the second position is not reversible until the landing gear is under load.

**10.** A process according to claim 8 in which the control of the trailing edge flaps is automatic.

**11.** A process according to claim 8 or to claim 10, in which the deployment of the trailing edge flaps is progressive.

**12.** A process according to claim 1 and claim 8, wherein the control of the airbrakes and the control of the trailing edge flaps are conjugated.

**13.** A device for improving the maneuverability of an aircraft during an approach phase to landing and then a flare-out phase, the aircraft being equipped with air brakes (7), the device comprising : an actuation unit (CALCL) to put in case of a steep angle approach, the air brakes in a first deployed position during the approach phase to obtain an angle of incidence ($\alpha$2app) of the aircraft and a control unit (LEV), **characterized in that** the control unit (LEV) is suitable, as a function of a representative parameter of a given altitude and in case of a steep angle approach for controlling the actuation unit (CALC1) to put the air brakes for the beginning of the flare-out phase to a second more retracted position than the first position to substantially maintain the said angle of incidence of the aircraft during the flare-out phase.

**14.** The device according to claim 13 in which the control unit (LEV) includes a manual control lever while the actuation unit (CALC1) includes a computer suitable for controlling the retraction of the air brakes in response to a command emitted by the control lever (LEV).

**15.** A device for improving the maneuverability of an aircraft during an approach phase to landing and then a flare-out phase, the aircraft being equipped with air brakes (7), the device comprising : an actuation unit which performs actuation of the air brakes (CALC1) and a control unit (CALC2) control suitable for controlling the actuation unit of the air brakes, the control unit (CALC2) being suitable, in case of a steep angle approach for automatically putting the air brakes in a first deployed position during the approach phase to obtain an angle of incidence ($\alpha$2app) of the aircraft, **characterized in that** as a function of a representative parameter of a given altitude and in case of a steep angle approach, the control unit (CALC2) is suitable for automatically controlling at the beginning of the flare-out phase a progressive transition of the air brakes to a second more retracted position than the first position to substantially maintain the said angle of incidence of the aircraft during the flare-out phase.

**16.** The device according to claim 15, in which the control unit (CALC2) is of a computer type suitable for emitting a command sequence upon an altitude threshold while the actuation unit (CALC1) is of a computer type suitable for controlling the retraction of the air brakes in response to an order emitted by the control unit (CALC2).

**17.** The device according to claim 15 in which the control unit (CALC2) is of a computer type suitable for emitting an order sequence as a function (G) of the altitude while the actuating unit is of a computer type (CALC1) suitable for controlling the retraction of the air brakes in response to an order emitted by the control unit (CALC2).

**18.** An aircraft equipped with air brakes including a device for improving the maneuverability of an aircraft during steep angle approach to landing and then a flare-out phase according to claim 13 or claim 14.

**19.** An aircraft equipped with air brakes and an automatic controller of said air brakes including a device for improving the maneuverability of an aircraft during steep angle approach to landing and then a flare-out phase according to one of the claims 15 to 17.

A/C
E
1
2
5
3
1
2
5
3

Fig. 1

E
11
7
6
11
III
3
III
6
2
7
11
7
6
1
5
11
4

Fig. 2

13
11
6
12
7
16
14
8
15
10
4
9

Fig. 3

11
7
13
B
12
16
7
6
14
4
10
15
9

Fig. 4

A
V
H
θ
γ
α
C

Fig. 5

Cz
Cz1
Cz1app
CFSA
ECA1
Δα1
α
α1
α1app

Fig. 6

CFSA
CFAA
ECA2
Cz
Cz2
Cz2 app
Δα2
α
α2
α2app

Fig. 7

CFSA
CFAA
ECA3
Cz
Cz2
Cz2 app
α
Δα3
α2app
α3

Fig. 8

Temps
Degrés
γ
α
θ

Fig. 9

CFAA
CFSA
EV
Cz
α

Fig. 10

EQU
EQUIPAGE
Altitude (h)
Actionnement du
levier d'aérofrein
LEV
Position du levier POS
CALC1
Adaptation
du braquage des aérofreins

Fig. 11a

Altitude (h)
Pente d'approche
F
Braquage aérofreins
désiré avant l'arrondi
seuil
Si h < seuil
Rentrée des aérofreins
Altitude (h)
CALC2
Ordre de rentrée
des aérofreins
CALC1
Rentrée des aérofreins


Fig. 11b

Altitude (h)
G
Braquage aérofreins
Altitude (h)
CALC2
Braquage des aérofreins
CALC1
Adaptation du braquage des aérofreins

Fig. 11c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 3589648 A